# EUROPÄISCHE PATENTSCHRIFT

(11) **EP 1 278 582 B1**
(45) Veröffentlichungstag und Bekanntmachung des Hinweises auf die Patenterteilung: **30.12.2009**
(21) Anmeldenummer: 01927753.2
(22) Anmeldetag: 19.03.2001
(51) Int. Cl.: B01D 15/00, B01D 15/02, B01D 53/02, B01D 53/12, B01J 20/32

(54) **VERFAHREN ZUR ABTRENNUNG VON KOMPONENTEN AUS FLÜSSIGEN UND GASFÖRMIGEN MEDIEN MIT NANOKOMPOSITEN**
METHOD FOR SEPARATING COMPONENTS FROM LIQUID AND GASEOUS MEDIA WITH NANOCOMPOSITES
PROCEDE PERMETTANT DE SEPARER DES CONSTITUANTS DE MILIEUX LIQUIDES ET AQUEUX A L'AIDE DE NANOCOMPOSITES

(30) Priorität: 20.03.2000 DE 10013670
(43) Veröffentlichungstag der Anmeldung: 29.01.2003
(73) Patentinhaber: Leibniz-Institut für Neue Materialien gemeinnützige GmbH, 66123 Saarbrücken (DE)
(72) Erfinder: SCHIESTEL, Thomas, 70565 Stuttgart (DE); MÜLLER, Thomas, 66540 Neunkirchen/Saar (DE); SCHIRRA, Hermann, 66111 Saarbrücken (DE); SCHMIDT, Helmut, 66130 Saarbrücken-Güdingen (DE)
(74) Vertreter: Köllner, Malte
(86) Internationale Anmeldenummer: PCT/EP2001/003129
(87) Internationale Veröffentlichungsnummer: WO 2001/070365

(56) Entgegenhaltungen:
- EP-A- 0 522 856
- EP-A- 0 757 106
- DE-A- 4 307 262
- DE-A- 19 614 136
- US-A- 4 319 893
- US-A- 4 554 088

## Beschreibung

Die Erfindung betrifft ein Verfahren zur Abtrennung von Komponenten aus flüssigen und gasförmigen Medien mit Nanokompositen sowie ein Verfahren zur Herstellung der Nanokomposite.

Das Abtrennen von molekularen oder makromolekularen Komponenten aus Lösungen und aus der Gasphase erfolgt in der Regel durch Absorptionsverfahren und/oder durch chemische Bindung der molekularen oder makromolekularen Komponenten an eine Festkörperoberfläche. Gelegentlich reagieren diese Komponenten auch mit der Oberfläche. Diese Prozesse sind jedoch meistens nicht mehr reversibel.

Zur Aufrechterhaltung eines kostengünstigen Verfahrens werden die Oberflächen in der Regel regeneriert. Kann dies nicht durchgeführt werden (wie z. B. in verschiedenen Fällen bei Aktivkohle), dann muß das gesamte System Adsorbens-Adsorbat entsorgt werden. Ein physikalisch schwer lösbares Problem bei allen Adsorptionsverfahren aus Gas- und Flüssigphasen ist die Tatsache, dass mit zunehmender Oberfläche (Erhöhung der Adsorptionskapazität) der Strömungswiderstand von Schüttungen bzw. Festbetten um mehrere Größenordnungen in Abhängigkeit von der Partikelgröße zunimmt. Besonders problematisch ist dies in Flüssigbetten. Dies beeinträchtigt die Wirkungsweise von Adsorberbetten sehr massiv. Eine Abhilfe wäre, sehr kleine Partikel in Suspension zu halten. Diese müssen jedoch wiederum abfiltriert werden, und das Problem des geringen Flüssigkeitsdurchsatzes wird von der adsorptiven Seite auf die Abfiltrationsseite lediglich verlagert, aber nicht gelöst.

Die Aufgabe bestand nun darin, Stoffe und Verfahren zu finden, welche die genannten technischen Nachteile nicht haben.

Ein interessanter Weg besteht darin, dass man für die Adsorption bestimmter Komponenten magnetisierbare und/oder magnetische Teilchen heranzieht, die in Suspension gehalten werden, und die dann durch Anlegen eines Magnetfeldes aus dem Reaktionsmedium (zu reinigende Flüssigkeit oder Gasphase) abgetrennt werden. Ein wichtiger Gesichtspunkt ist die Adsorptionsselektivität von Oberflächen. Diese wird in der Regel bei Adsorptionsmitteln nur gruppenspezifisch erreicht, d. h. es wird in der Regel immer eine chemische Familie mit ähnlicher Funktionalität an einer entsprechende Oberfläche adsorbiert. Die Ausstattung von typischen Adsorptionsmitteln, wie z. B. Aktivkohle oder Aluminiumhydroxid, mit selektiven Funktionalitäten ist schwierig, da die Beladung dieser Adsorptionsmitteln mit solchen Gruppen technisch nur in wenigen Fällen realisierbar. Man behilft sich dabei mit weniger selektiven Verfahren, z. B. der Hydrophobierung oder der Hydrophilierung von Oberflächen, oder man versucht über Dotierung, z. B. von Aluminiumoxiden in saurem oder basischen Charakter, und die Ladung der Adsorptionsstellen zu beeinflussen.

Die magnetische Abscheidung mit magnetischen Partikeln wird in der Form realisiert, dass Glimmerplättchen mit Eisenoxiden beschichtet werden, und darauf eine Glasschicht abgeschieden wird, die in der Lage ist, bestimmte biochemische Komponenten mehr oder weniger selektiv zu adsorbieren. Dies ist jedoch ein relativ unselektives Verfahren und ist für die Trennung von kleineren Molekülen aus Flüssigkeiten und Gasen nicht geeignet. Nur Makromoleküle, die eine entsprechende Oberflächenladung besitzen, werden adsorbiert.

Magnetische Partikel müssen nanoskalig sein, wenn sie keinen permanenten Magnetismus aufweisen sollen. Ein permanenter Magnetismus nach Abschalten eines Magnetfeldes wird durch gegenseitige Wechselwirkung der Teilchen zu einer Aggregation führen. Die Teilchengröße ist daher bevorzugt < 20 nm, um sogenanntes superparamagnetisches Verhalten (Single-Domain-Strukturen) zu erreichen.

US 4554088 beschreibt ein Verfahren zur Herstellung magnetischer Teilchen, an die Moleküle angebunden werden können. Die Teilchen umfassen einen magnetischen Metallkern und sind von einer Silanbeschichtung umgeben und können für Trennverfahren eingesetzt werden.

DE-A-19614136 betrifft ein Verfahren zur Herstellung agglomeratfreier nanoskaliger Eisenoxidteilchen mit hydrolysebeständigem Überzug.

EP-A-0757106 beschreibt an Nucleinsäure anbindbare magnetische Träger, die Metalloxid umfassende magnetische Silicateilchen mit einer bestimmten spezifischen Oberfläche umfassen. EP-A-0522856 beschreibt ein Verfahren zur Reinigung von Lösungen. Hierfür werden magnetische Harzteilchen aus magnetischen Teilchen und einem organischen Polymer eingesetzt, die Stellen zur selektiven Anbindung von Ionen aufweisen.

US-A-4319893 betrifft ein Adsorptionsverfahren zur Gewinnung von Wasserstoff aus Gas oder Dampf, bei dem Komposite von einer magnetisierbaren Komponente und einem Adsorptionsmittel eingesetzt werden. DE-A-4307262 betrifft magnetisches polymeres Siliciumdioxid in Form von Kieselgelen, Kieselsolen und gefälltem oder pyrogenem Siliciumdioxid, wobei magnetische Materialien in die Matrix der Siliciumdioxidverbindungen eingebunden werden.

Die vorliegende Erfindung betrifft ein Verfahren zur Abtrennung einer oder mehrerer Komponenten aus flüssigen oder gasförmigen Medien wie in Anspruch 1 definiert.

Die erfindungsgemäße Aufgabe wurde nun dadurch gelöst, dass man superparamagnetische Nanopartikel, wie sie in der Deutschen Patentanmeldung 19614136 beschrieben sind, herstellt. Diese Partikel sind zur Verhinderung einer irreversiblen Aggregation mit funktionellen Gruppen, wie z. B. Aminen, Aminogruppen oder Carboxylatgruppen beschichtet. Da Aminogruppen gute Komplexbildner für Übergangsmetalle sind, ist es prinzipiell möglich, solche Partikel zur Bindung von Übergangsmetallionen in wäßrigen Lösungen heranzuziehen.

Eine Abtrennung mit einem Magnetfeld gelingt jedoch wegen der Kleinheit der Partikel und der damit verbundenen Braunschen Molekularbewegung nur unvollständig, so daß in einem strömenden Medium immer größere Anteile der Partikel mitgerissen werden. Die Aufgabe konnte dadurch gelöst werden, dass die Nanopartikel in einer flüssigen oder gelösten Matrixphase dispergiert werden, und man aus dieser Matrixphase größere Partikel mit gewünschten Durchmessern herstellt. Der Durchmesser dieser Partikel liegt zwischen 0,1 und 1000 µm, bevorzugt jedoch zwischen 1 und 500 µm, und besonders bevorzugt zwischen 50 und 300 µm.

Die Herstellung der Partikel kann dadurch erfolgen, dass man die flüssige Matrixphase in ein nichtmischbares Lösungsmittel einträgt, und über einen mechanischen Mischvorgang (z. B. Ultraturax-Rührer) eine Emulsion mit der richtigen Größenordnung herstellt. Dieses Verfahren erlaubt es, die genannten Partikelgrößen herzustellen. Während des mechanischen Energieeintrages, der durch Ultraschall ergänzt werden kann, erfolgt eine Verfestigungsreaktion nach üblichen Prinzipien. Dabei kann es sich um Polymerisationsreaktionen, Fällungsreaktionen, Additionsreaktionen oder Polykondensationsreaktionen handeln.
Welcher Reaktionstyp bevorzugt wird, hängt von dem Matrixsystem ab, das aus Alkoxiden hergestellt werden kann (Sol-Gel-Verfahren), aber auch aus organischen Monomeren, Oligomeren oder gelösten Phasen. Zusätzlich können in diese Matrix funktionelle Gruppen eingearbeitet sein, z. B. durch Verwendung funktioneller Silane oder funktioneller doppelbindungshaltiger Moleküle. Diese Matrixfunktionalisierung, die auch die Oberfläche der Nanokompositpartikel funktionalisiert, kann dazu verwendet werden, um Reaktionsselektivität (z. B. Komplexbildung mit Schwermetallen) zu erzeugen. Eine andere Variante des Verfahrens ist eine nachträgliche Oberflächenmodifizierung, z. B. durch Silanisierung bei Sol-Gel-Nanokompositpartikeln.

Mit derartigen Nanokompositpartikeln gelingt es nun, Suspensionen in wäßrigen oder organischen Lösungsmitteln herzustellen. Sie eignen sich aber auch für Fließbettverfahren in der Gasphase. Durch geeignete Wahl der funktionellen Gruppen an der Oberfläche lassen sich sowohl ionische Komponenten, als auch über Komplexbildung anbindbare Komponenten, aber auch biologische und biochemische Komponenten abtrennen, wenn entsprechende funktionelle Gruppen (Antikörper, Antigene, Proteine o. ä.) an die Oberfläche gebunden werden. Die Randbedingungen werden so gewählt, dass eine Bindung stattfindet, z. B. in pH-Bereichen, in denen die Dissoziationskonstante der Komplexbildung sehr niedrig ist. Nach dem Beladen der Partikel mit den entsprechenden zu entfernenden Komponenten, das durch Rühren beschleunigt werden kann, wird ein Magnetfeld eingeschaltet, das die Partikel an die Wand oder an eine Einrichtung bindet, die in die Suspension eingetragen wird. Diese Einrichtung wird dann mitsamt den beladenen Partikeln entfernt, und in einem Regenerationsschritt werden die gebundenen Komponenten eluiert, im Anschluß daran werden die Nanokompositpartikel wieder magnetisch abgetrennt und stehen dann für ein weiteres Abreinigungsverfahren zur Verfügung. Solche Verfahren lassen sich mit geeigneten Anlagen auch kontinuierlich betreiben. In analoger Weise verfährt man bei der Gasphasenreinigung im Fließbett.

Das beschriebene erfindungsgemäße Verfahren kann nun für eine breite Anzahl von Reinigungsverfahren aus Lösungen herangezogen werden.

Die Nanopartikel werden vorzugsweise nach DE-A-19614136 über einen Fällungsprozess hergestellt, bei dem anschließend unter Verwendung von Ultraschall eine Beschichtung der Nanopartikel erfolgt. Das in der DE-A-19614136 offenbarte Verfahren zur Herstellung agglomeratfreier nanoskaliger Eisenoxidteilchen mit hydrolysebeständigem Überzug und der darin genannten Verbindungen zur Herstellung derselben ist für die vorliegende Erfingung geeignet. Diese Beschichtung der Nanopartikel kann nun mit unterschiedlichen Komponenten erfolgen, und kann in wäßrigen, aber auch in nichtwäßrigen Lösungen durchgeführt werden. Auf diese Art und Weise lassen sich z. B. hydrophobe Beschichtungen oder hydrophile Beschichtungen erzielen, die dann wiederum für eine gute Dispergierbarkeit in der entsprechenden Matrix herangezogen werden müssen. Als Matrix können Sol-Gel-Systeme herangezogen werden, die man aus Alkoxiden und Organoalkoxysilanen herstellt. Beispiele hierfür sind Kieselsäureester, Organoalkoxysilane, Alkoxide von Elementen der dritten und vierten Hauptgruppe, sowie Alkoxide von Bor und von Phosphor. Es können jedoch auch Alkoxide von Elementen der zweiten Hauptgruppe zusätzlich herangezogen werden, sowie Alkoxide der Übergangmetalle und der Nebengruppenelemente. Die Nanopartikel, insbesondere die Eisenoxid-Nanopartikel, werden in den entsprechenden Reaktionsmischungen dispergiert und anschließend nach dem obengenannten Verfahren zu einer Emulsion verarbeitet.

Bei Alkoxiden genügt im allgemeinen die Zugabe von geringen Mengen von Wasser, gegebenenfalls unter Zugabe geringer Säuremengen, um eine Kondensation einzuleiten und Feststoffpartikel zu erhalten. Bei organischen Systemen werden die Partikel bevorzugt hydrophobiert oder mit Oberflächenmodifikatoren versehen werden, die aufgrund ihrer Kompatibilität mit der flüssigen Matrix nicht agglomerieren. Die Verfestigung von organischen Matrices kann durch Polymerisationsprozesse erfolgen, wenn man übliche Polymerisationskatalysatoren beimischt und eine thermische oder UV-Polymerisation durchführt, während die Mikroemulsion stabil ist.

Durch die Zugabe von funktionellen Molekülen zu der Matrix, z. B. entsprechende Organoalkoxysilane mit funktionellen Gruppen (Säuren, Basen, Aminen, Chelatliganden u. a.) läßt sich eine Selektivität der Matrix an der Partikeloberfläche erzeugen. Eine weitere Methode ist die Ankopplung von selektiv bindenden Komponenten. Hierfür eignen sich z. B. ebenfalls Chelatliganden, aber auch biochemische Moleküle, die nach dem Schloss-Schlüssel-Prinzip funktionieren, z. B. Antigene, Antikörper oder Proteine. Dazu werden die in der Literatur üblichen Kopplungsreaktionen verwendet. Nach der Herstellung der Partikel wird das Lösungsmittel unter Rühren abgezogen, und der Rückstand, sofern er sich verfestigt, wird, falls notwendig, durch mechanische Zerkleinerungsprozesse auf die gewünschte Partikelgröße gebracht. Zur Trocknung können auch bewegte Trocknungsaggregate wie Fließbettreaktoren, Fließbetttrockner oder Trirohröfen verwendet werden. Statt durch Abziehen des Lösungsmittels kann die Abtrennung durch Zentrifugieren, Dekantieren, Filtrieren und anschließendem Trocknen erfolgen.

## Patentansprüche

1. Verfahren zur Abtrennung einer oder mehrerer Komponenten aus flüssigen oder gasförmigen Medien mit einem Nanokomposit, wobei das Nanokomposit in Form von Nanokompositpartikeln eingesetzt wird und durch eine Verfestigungs reaktion einer flüssigen matrixphase, welche als Emulsion in einem nicht mischbaren Lösungsmittel vorliegt, wobei in der flüssigen Matrixphase beschichtete superparamagnetische Nanopartikel mit einer Größe von unter 20 nm dispergiert sind, hergestellt wurde und das Nanokomposit einen Durchmesser von 50 bis 300 µm aufweist, bei dem das flüssige oder gasförmige Medium in einer solchen Weise mit dem Nanokomposit in Kontakt gebracht wird, dass die abzutrennenden Komponenten zumindest zum Teil an das Nanokomposit gebunden werden, und das so beladene Nanokomposit von dem flüssigen oder gasförmigen Medium abgetrennt wird.

2. Verfahren nach Anspruch 1, **dadurch gekennzeichnet, dass** man die beladenen Nanokomposite von dem flüssigen oder gasförmigen Medium abtrennt, indem man ein Magnetfeld anlegt.

3. Verfahren nach einem der Ansprüche 1 oder 2, **dadurch gekennzeichnet, dass**
die Nanopartikel mit funktionellen Gruppen beschichtet sind.

4. Verfahren nach einem der Ansprüche 1 bis 3, **dadurch gekennzeichnet, dass**
Nanokomposite eingesetzt werden, die Eisenoxid enthaltende Nanopartikel enthalten.

5. Verfahren nach einem der Ansprüche 1 bis 4, **dadurch gekennzeichnet, dass** Nanokomposite eingesetzt werden, deren Matrix aus Polykondensaten auf Basis von Alkoxiden von Elementen der zweiten bis fünften Hauptgruppe, der Übergangsmetalle oder der Nebengruppenelemente oder hydrolysierbaren Verbindungen von Elementen der zweiten bis fünften Hauptgruppe, der Übergangsmetalle oder der Nebengruppenelemente mit mindestens einer nicht hydrolysierbaren Gruppe oder Mischungen davon besteht.

6. Verfahren nach einem der Ansprüche 1 bis 5, **dadurch gekennzeichnet, dass**
Nanokomposite eingesetzt werden, deren Matrix zusätzliche funktionelle Gruppen oder bifunktionelle Moleküle enthält.

7. verfahren nach einem der Ansprüche 1 bis 6, **dadurch gekennzeichnet, dass**
Nanokomposite eingesetzt werden, die durch funktionelle Gruppen oberflächenmodifiziert sind.

8. Verfahren nach Anspruch 7, **dadurch gekennzeichnet, dass** die funktionellen Gruppen durch funktionelle Silane, deren funktionelle Gruppen Säuren, Basen, Amine, Doppelbindungen, Epoxid-Chelatliganden darstellen, bereitgestellt werden.

9. Verfahren nach Anspruch 7, **dadurch gekennzeichnet, dass** die Oberflächenmodifikation durch Kopplung mit biologischen Komponenten, wie Antigenen, Antikörpern und Proteinen erfolgt.

10. Verfahren nach einem der Ansprüche 1 bis 9, **dadurch gekennzeichnet, dass**
das flüssige Medium eine wässrige Phase ist und die Nanokompositpartikel darin dispergiert sind.

11. Verfahren nach einem der Ansprüche 1 bis 9, **dadurch gekennzeichnet, dass** die Nanokompositpartikel in einem Fließbett verwendet werden.

12. Verfahren nach einem der vorhergehenden Ansprüche,
**dadurch gekennzeichnet, dass**
gelöste oder gasförmige Komponenten abgetrennt werden

## Claims

1. Process for separating one or more components from liquid or gaseous media using a nanocomposite in the form of nanocomposite particles, the nanocomposite being prepared by a consolidating reaction of a liquid matrix phase present as an emulsion in an immiscible solvent, coated superparamagnetic nanoparticles below 20 nm in size being in a state of dispersion in the liquid matrix phase, the nanocomposite having a diameter of 50 to 300 µm, which process comprises contacting the liquid or gaseous medium with the nanocomposite such that the components to be separated off become at least partly bound to the nanocomposite, and separating the nanocomposite thus loaded from the liquid or gaseous medium.

2. Process according to Claim 1, **characterized in that** the loaded nanocomposites are separated from the liquid or gaseous medium by applying a magnetic field.

3. Process according to either of Claims 1 and 2, **characterized in that** the nanoparticles have a coat of functional groups.

4. Process according to any one of Claims 1 to 3, **characterized in that** nanocomposites used contain nanoparticles comprising iron oxide.

5. Process according to any one of Claims 1 to 4, **characterized in that** nanocomposites used have a matrix consisting of polycondensates based on alkoxides of elements of main groups two to five, of the transition metals or of the transition group elements or hydrolyzable compounds of elements of main groups two to five, of the transition metals or the transition group elements with at least one non-hydrolyzable group or mixtures thereof.

6. Process according to any one of Claims 1 to 5, **characterized in that** nanocomposites used have a matrix which contains additional functional groups or bifunctional molecules.

7. Process according to any one of Claims 1 to 6, **characterized in that** nanocomposites used are surface modified by functional groups.

8. Process according to Claim 7, **characterized in that** the functional groups are provided by functional silanes whose functional groups constitute acids, bases, amines, double bonds, epoxide-chelating ligands.

9. Process according to Claim 7, **characterized in that** the surface modification is effected by coupling to biological components, such as antigens, antibodies and proteins.

10. Process according to any one of Claims 1 to 9, **characterized in that** the liquid medium is an aqueous phase and the nanocomposite particles are in state of dispersion therein.

11. Process according to any one of Claims 1 to 9, **characterized in that** the nanocomposite particles are used in a moving bed.

12. Process according to any preceding claim, **characterized in that** dissolved or gaseous components are separated off.

## Revendications

1. Procédé de séparation d'un ou de plusieurs composants de fluides liquides ou gazeux à l'aide d'un nanocomposite, le nanocomposite étant utilisé sous la forme de particules de nanocomposite et préparé par une réaction de solidification d'une phase matricielle liquide présente en émulsion dans un solvant non miscible, les nanoparticules revêtues et super-paramagnétiques d'une taille inférieure à 20 nm étant dispersées dans la phase matricielle liquide, le nanocomposite présentant un diamètre de 50 à 300 µm,
dans lequel le fluide liquide ou gazeux est mis en contact avec le nanocomposite de telle sorte que les composants à séparer soient liés au moins partiellement au nanocomposite, le nanocomposite ainsi chargé étant séparé du fluide liquide ou gazeux.

2. Procédé selon la revendication 1, **caractérisé en ce que** le nanocomposite chargé est séparé du fluide liquide ou gazeux en appliquant un champ magnétique.

3. Procédé selon l'une des revendications 1 ou 2, **caractérisé en ce que** les nanoparticules sont revêtues par des groupes fonctionnels.

4. Procédé selon l'une des revendications 1 à 3, **caractérisé en ce qu'**il utilise des nanocomposites qui contiennent des nanoparticules contenant de l'oxyde de fer.

5. Procédé selon l'une des revendications 1 à 4, **caractérisé en ce qu'**il utilise des nanocomposites dont la matrice est constituée de polycondensats à base d'alcoxydes d'éléments des groupes principaux deux à cinq, de métaux de transition ou d'éléments des groupes secondaires, de composés hydrolysables d'éléments des groupes principaux deux à cinq, de métaux de transition ou d'éléments des groupes secondaires avec au moins un groupe non hydrolysable ou de leurs mélanges.

6. Procédé selon l'une des revendications 1 à 5, **caractérisé en ce qu'**il utilise des nanocomposites dont la matrice contient de plus des groupes fonctionnels ou des molécules bifonctionnelles.

7. Procédé selon l'une des revendications 1 à 6, **caractérisé en ce qu'**il utilise des nanocomposites dont la surface a été modifiée par des groupes fonctionnels.

8. Procédé selon la revendication 7, **caractérisé en ce que** les groupes fonctionnels sont apportés par des silanes fonctionnels dont les groupes fonctionnels sont des acides, des bases, des amines, des doubles liaisons ou des ligands chélatants d'époxyde.

9. Procédé selon la revendication 7, **caractérisé en ce que** la modification de surface s'effectue par couplage avec des composants biologiques, par exemple des antigènes, des anticorps ou des protéines.

10. Procédé selon l'une des revendications 1 à 9, **caractérisé en ce que** le fluide liquide est une phase aqueuse dans laquelle les particules des nanocomposites sont dispersées.

11. Procédé selon l'une des revendications 1 à 9, **caractérisé en ce que** les particules des nanocomposites sont utilisées dans un lit d'écoulement.

12. Procédé selon l'une des revendications précédentes, **caractérisé en ce que** les composants séparés sont dissous ou gazeux.
